(19) Europäisches Patentamt
European Patent Office
Office européen des brevets

(11) EP 1 169 386 B2

(12) NEUE EUROPÄISCHE PATENTSCHRIFT

(45) Veröffentlichungstag und Bekanntmachung des Hinweises auf die Entscheidung über den Einspruch:
**19.10.2005 Patentblatt 2005/42**

(45) Hinweis auf die Patenterteilung:
**11.09.2002 Patentblatt 2002/37**

(21) Anmeldenummer: **00903686.4**

(22) Anmeldetag: **11.02.2000**

(51) Int Cl.[7]: **C08K 13/02**
// (C08K13/02, 3:22),
C08K5:42,(C08K13/02, 3:30),
C08K5:42

(86) Internationale Anmeldenummer:
**PCT/EP2000/001117**

(87) Internationale Veröffentlichungsnummer:
**WO 2000/050511 (31.08.2000 Gazette 2000/35)**

(54) **FLAMMWIDRIGE THERMOPLASTISCHE FORMMASSE**

FLAME-RESISTANT THERMOPLASTIC MOULDING MATERIAL

MATIERE MOULABLE THERMOPLASTIQUE ININFLAMMABLE

(84) Benannte Vertragsstaaten:
**AT BE CH CY DE DK ES FI FR GB GR IE IT LI LU MC NL PT SE**

(30) Priorität: **24.02.1999 DE 19907831**

(43) Veröffentlichungstag der Anmeldung:
**09.01.2002 Patentblatt 2002/02**

(73) Patentinhaber: **Bayer Aktiengesellschaft**
**51368 Leverkusen (DE)**

(72) Erfinder:
- **BRENNER, Axel**
**D-40479 Düsseldorf (DE)**
- **KÖHLER, Walter**
**D-47239 Duisburg (DE)**
- **DÖBLER, Martin**
**D-40593 Düsseldorf (DE)**

(56) Entgegenhaltungen:
**EP-A- 0 531 861** **JP-A- 53 025 660**
**US-A- 3 509 091** **US-A- 3 775 367**
**US-A- 3 971 756** **US-A- 4 391 935**
**US-A- 4 438 231** **US-A- 5 274 017**
**US-A- 5 849 827**

- **DATABASE WPI Section Ch, Week 199503 Derwent Publications Ltd., London, GB; Class A23, AN 1995-019421 XP002137102 & JP 06 306268 A (IDEMITSU PETROCHEM CO), 1. November 1994 (1994-11-01)**
- **DATABASE WPI Section Ch, Week 199145 Derwent Publications Ltd., London, GB; Class A14, AN 1991-329261 XP002137103 & JP 03 220253 A (LION CORP), 27. September 1991 (1991-09-27)**
- **Kirk-Othmer Encyclopedia of Chemical Technology, Third Edition, Supplement Volume, pp. 240-259, John Wiley and Sons, Inc., USA**

EP 1 169 386 B2

## Beschreibung

Die Erfindung betrifft eine flammwidrige thermoplastische Formmasse, die ein amorphes thermoplastisches Polymer und ein Flammschutzmittel enthält und daraus hergestellte flammwidrige Formkörper.

Das Flammverhalten von amorphen thermoplastischen Kunststoffen wie Polycarbonaten spielt insbesondere in Bereichen, in denen bestimmte Brandschutzvorschriften eingehalten werden müssen, wie dem Elektro-, Kfz- und Bau- und Luftfahrtsektor, eine wichtige Rolle. Als Standard für die Brennbarkeit von festen Kunststoffen wird häufig die Brennbarkeitsprüfung UL-94 der Underwriters Laboratories, Northbrook, Illinois, USA herangezogen, die sowohl die Nachbrennzeit des Kunststoffs nach erfolgter Beflammung als auch die Tendenz zum brennenden Abtropfen berücksichtigt. Nach der Vorschrift UL-94 werden 12,7 x 1,27 cm große Kunststoffproben mit variabler Dicke unter bestimmten Bedingungen beflammt und die Nachbrennzeit bestimmt. Die Proben werden mit abnehmender Flammwidrigkeit in die UL-94 Brennbarkeitsklassen V0 , V1 und V2 eingestuft. Für eine Einstufung in die UL-94 Brennbarkeitsklasse V0 darf eine bestimmte Nachbrennzeit nicht überschritten und zusätzlich ein unter der Probe befindlicher Wattebausch nicht durch brennend abtropfende Teile entflammt werden.

Zur Herstellung von flammwidrigen amorphen thermoplastischen Kunststoffen wie Polycarbonaten werden Flammschutzmittel eingesetzt. Solche sind allgemein bekannt und beispielsweise in B. J. Sutker "Flame retardants", Ullmann's Encyclopedia of Industrial Chemistry, 6. Aufl., 1998 beschrieben.

Es besteht ein Bedarf an Formteilen aus flammwidrigen amorphen thermoplastischen Kunststoffen, die auch bei relativ geringen Wandstärken noch die UL-94 Brennbarkeitsklasse V0 erfüllen. So läßt sich etwa durch Verwendung möglichst dünnwandiger Polycarbonat-Gehäuse bei elektrischen Geräten Gewicht einsparen. Ferner besteht ein Bedarf an dünnwandigen Formteilen aus amorphen thermoplastischen Formteilen, die neben hervorragenden Flammschutzeigenschaften auch transparent sind. Transparente Polycarbonatformteile spielen etwa in Gehäusen und Abdeckplatten für elektrische Geräte sowie auf dem Bausektor für Platten, Fenster und Verkleidungen verschiedenster Art eine Rolle.

Aus der EP 0 531 861 A1 ist bekannt, Polycarbonate mit einem halogenfreien Sulfonsäuresalz aromatischer Aldehyde oder deren Acetalderivaten gegebenenfalls in Kombination mit anorganischen Sulfaten wie Natrium- oder Kaliumsulfat als Flammschutzmittel auszurüsten. Durch Verwendung dieser Flammschutzmittel läßt sich die UL-94 Brennbarkeitsklasse V0 für 3,2 mm dicke Polycarbonatprüfkörper erreichen. Prüfkörper mit einer geringeren Dicke erreichen die UL-94 Brennbarkeitsklasse V0 nicht.

Aus der EP 0 362 623 A2 sind ferner flammgeschützte, gut kristallisierende Polyethylenterephthalatformmassen bekannt, die 1 bis 25 Gew.-% Polyalkylphosphonate als Flammschutzmittel sowie 0,01 bis 10 Gew.-% ultrafeines Bariumsulfat in Kombination mit 0,01 bis 5 Gew.-% fluorierten Polyolefinen als Kristallisationshilfsmittel enthalten. Wegen ihres Gehalts an fluorierten Polyolefinen lassen sich aus den beschriebenen Polyethylenterephthalatformmassen nur trübe Formteile herstellen.

Nachteilig an den bekannten Flammschutzmitteln ist, daß sich die UL-94 Brennbarkeitsklasse V0 für Polycarbonat nur bei einer Wandstärke des Formteils von 3,2 mm oder dicker erreichen läßt. Ferner neigen die bekannten Flammschutzmittel zu einer Trübung der thermoplastischen Formmassen und/oder unterliegen häufigen Schwankungen in ihrer flammhemmenden Wirkung. Nachteilig ist ferner, daß die Flammschutzwirkung von mit bekannten Flammschutzmitteln ausgerüsteten Formteilen durch das Recyclingverfahren häufig stark beeinträchtigt wird. Die durch Schreddem und nochmaliges Verspitzen von Ausschußware zu Recyclingformteilen weisen daher häufig ein wesentlich schlechteres Flammverhalten auf als die ursprünglichen Formteile. Darüber hinaus erfahren eine Reihe von bekannten Flammschutzmitteln durch die Gegenwart von Entformungsmitteln wie Glycerinmonostearat (GMS) oder Pentaerytrittetrastearat (PETS) empfindliche Einbußen in ihrer Wirksamkeit. Häufig erfordern bekannte Flammschutzmittel zur Entfaltung ihrer Wirkung die Verwendung zusätzlicher Umesterungskatalysatoren, welche zu unerwünschten Veränderungen in den Eigenschaften des Kunststoffs führen können.

Der Erfindung liegt die Aufgabe zugrunde; amorphe thermoplastische Formmassen, insbesondere solche aus Polycarbonat, mit verbessertem Flammverhalten bereitzustellen. Die Formmassen sollen auch bei Wandstärken von weniger als 3,2 mm noch die UL-94 Brennbarkeitsklasse V0 erreichen. Dies soll nach Möglichkeit ohne Verschlechterung der Transparenz und der mechanischen Eigenschaften der Formmassen erfolgen. Ferner sollen die Formmassen auch noch als Recyclat den gewünschten Flammschutz bieten. Der Flammschutz soll ferner nicht durch die Verwendung von Entformungsmitteln wie GMS oder PETS beeinträchtigt werden. Ferner sollen die Formmassen ohne Verwendung zusätzlicher, zu unerwünschten Veränderungen in den Eigenschaften führenden Umesterungskatalysatoren herstellbar sein.

Diese Aufgabe wird erfindungsgemäß durch eine thermoplastische Formmasse gelöst, die ein amorphes thermoplastisches Polymer und ein Flammschutzmittel in Kombination mit einem Erdalkalisulfat mit jeweils einer mittleren Teilchengröße von bis zu 400 nm enthält. Die erfindungsgemäß verwendeten Erdalkalisulfate mit einer mittleren Teilchengröße von bis zu 400 nm werden im folgenden auch als "nanoteilige" oder "ultrafeine" Erdalkalisulfate bezeichnet.

Insbesondere umfaßt die ein amorphes thermoplastisches Polymer enthaltende Formmasse als Flammschutzmittel ein Gemisch aus einem bekannten Flammschutzmittel, ausgewählt aus Sulfonsäuresalzen, Sulfonamidsäuresalzen, organischen Phosphaten und deren Salzen, halogenierten Benzoesäureestersalzen und Hexafluoroaluminaten und einem Erdalkalisulfat mit jeweils einer mittleren Teilchengröße von bis zu 400 nm.

Gemäß einer Ausführungsform der Erfindung enthält die erfindungsgemäße Formmasse ferner einen fluorierten Kohlenwasserstoff wie Polytetrafluorethylen.

Dabei wurde überraschenderweise gefunden, daß man durch Zusatz von nanoteiligen Erdalkalisulfaten zusätzlich zu den bekannten Flammschutzmitteln flammwidrige thermoplastische Formmassen mit einem überaus günstigen Eigenschaftsprofil herstellen kann. So erreichen die erfindungsgemäßen Formteile selbst noch bei einer Wandstärke von 0,8 mm die UL-94 Brennbarkeitsklasse V0 und bestehen den UL-94 5V-Stabtest gemäß Underwriters Laboratories bis zu einer Dicke von 2,8 mm.

Durch den Einsatz von nanoteiligen Erdalkalisulfaten kann die zur Erzielung einer bestimmten Flammschutzwirkung erforderliche Menge an bekannten Flammschutzmitteln reduziert werden. Dies bedeutet, daß durch den Einsatz von nanoteiligen Erdalkalisulfaten bei gleicher Flammschutzwirkung weniger Flammschutzmittel eingesetzt werden muß.

Durch Zusatz von nanoteiligen Erdalkalisulfaten läßt sich die Flammschutzwirkung von bekannten Flammschutzmitteln deutlich verbessem, obwohl die erstgenannte Verbindungsklasse allein keine flammhemmende Wirkung besitzt. Dies bedeutet, daß die Kombination von bekannten Flammschutzmittel und nanoteiligen Erdalkalisulfaten eine synergistische Wirkung hinsichtlich der flammhemmenden Eigenschaften der thermoplastischen Formmassen entfaltet

Die mechanischen Eigenschaften der erfindungsgemäßen thermoplastischen Formmassen werden durch die Gegenwart von nanoteiligen Erdalkalisulfaten nicht nachteilig beeinflußt und sind selbst nach dem Recyklieren der Formmassen gut. So zeichnen sich die erfindungsgemäßen Formmassen sowohl vor und nach dem Recyklieren beispielsweise durch eine hohe Kerbschlagzähigkeit nach ISO 180-4a aus.

Ein wesentlicher Vorteil der Erfindung liegt ferner darin, daß die Formteile auch hochtransparent hergestellt werden können. Dies ist insbesondere bei auf dem Bausektor verwendeten Kunststofformteilen wie Kunststoffenstem sowie bei Gehäusen und Abdeckplatten von elektrischen Geräten von Bedeutung. Für die erfindungsgemäßen transparenten Formteile läßt sich die UL-94-Brennbarkeitsklasse V0 bis zu einer Wandstärke von 2,4 mm erreichen. Ferner weisen Regenerate von Formteilen, die mit den hier beschriebenen Zusätzen ausgerüstet wurden, immer noch eine hohe Flammfestigkeit und eine niedrige Tendenz zum brennenden Abtropfen auf.

In Formmassen, die zur Herstellung von transparenten Formteilen bestimmt sind, weisen die verwendeten Erdalkalisulfate vorzugsweise eine mittlere Teilchengröße von weniger als etwa 100 nm, noch bevorzugter von etwa 5 bis 40 nm auf. Die Teilchengröße kann beispielsweise durch Ultrazentrifugation nach Langer, H. "Particle and particle size characterization", Bd. 12, S.148, 1995 bestimmt werden.

Erfindungsgemäß einsetzbare Erdalkalisulfate sind beispielsweise Magnesiumsulfat, Calciumsulfat, Strontiumsulfat und Bariumsulfat. Es können auch Mischungen von verschiedenen Erdalkalisulfaten eingesetzt werden.

Gemäß einer besonders bevorzugten Ausführungsform der Erfindung wird nanotelliges Bariumsulfat verwendet. Dieses kann beispielsweise wie in der EP 335 159 A1 beschrieben durch Vereinigen von getrennten wäßrigen Lösungen, die jeweils äquimolare Mengen Barium- bzw. Sulfationcn enthalten, etwa durch Vereinigen äquimolarer Bariumchlorid- und Natriumsulfatlösungen, und anschließendes Abtrennen des Präzipitats hergestellt werden. Um eine Primärkorngröße von weniger als 0,1 µm zu erhalten, werden die jeweiligen wäßrigen Lösungen kontinuierlich jeweils In Tropfenform einer mittleren Tropfengröße von weniger als etwa 0,5 µl rasch zusammengebracht und die Fällung in einem Gesamtvolumen von weniger als etwa 1 µl rasch und vollständig herbeigeführt.

Die Menge der Erdalkalisulfate in der Formmasse kann in weiten Grenzen variiert werden. Oberhalb von 10 Gew.-%, bezogen auf das Gesamtgewicht der Formmasse, treten jedoch unerwünschte Veränderungen der physikalischen Eigenschaften der Formmassen auf, während bei Zusatzmengen unter 0,0005 Gew.-% keine nennenswerte flammschutzverstärkende Wirkung eintritt. Da die flammschutzverstärkende Wirkung bereits mit sehr geringen Zusatzmengen erreicht wird, werden die Erdalkalisulfate vorzugsweise in Mengen von 0,001 bis 5,0 Gew.-% und noch bevorzugter 0,01 bis 2,0 Gew.-%, bezogen auf das Gesamtgewicht der Formmasse, eingesetzt.

Die synergistische Wirkung der nanoteiligen Erdalkalisulfate hinsichtlich der flammhemmenden Eigenschaften der Formmassen tritt in Verbindung mit einer Vielzahl von bekannten Flammschutzmitteln auf. Hierzu zählen sowohl halogenhaltige als auch halogenfreie Verbindungen. Geeignete Halogenverbindungen sind organische Fluor-, Chlor- und/oder Bromverbindungen, die bei der Herstellung und Verarbeitung der erfindungsgemäßen Formmassen stabil sind, so daß keine korrosiven Gase freigesetzt werden und deren Wirksamkeit nicht beeinträchtigt wird. Es können auch Mischungen von bekannten Flammschutzmitteln eingesetzt werden.

Die Menge der eingesetzten Flammschutzmittel kann in weiten Grenzen variiert werden und hängt in starken Maße von den gewünschten Flammschutzeigenschaften des Kunststoffs und von der Art des verwendeten Flammschutzmittels ab. Vorzugsweise werden 0,001 bis 5,0 Gew.-%, insbesondere 0,05 bis 0,5 Gew.-% Flammschutzmittel, bezogen auf das Gesamtgewicht der Formmasse, eingesetzt.

Erfindungsgemäß besonders bevorzugte Flammschutzmittel sind Sulfonsäuresalze, Sulfonsäureamidsalze, organische Phosphate und deren Salze, halogenierte Benzoesäureestersalze und/oder Hexafluoroaluminate.
Besonders geeignete Sulfonsäuresalze sind solche der allgemeinen Formel (I)

$$[R\text{-}SO_3]_n^- \; M^{n+} \qquad (I)$$

worin

R ein geradkettiger oder verzweigter aliphatischer Rest mit 1 bis 30 Kohlenstoffatomen oder ein aromatischer Rest mit 6 bis 30 Kohlenstoffatomen, die ganz oder teilweise halogeniert sein können,

M ein beliebiges Kation und n eine der Valenz von M entsprechende Zahl, ist.

Diese sind etwa in der US 4 239 678 beschrieben. Besonders bevorzugt sind ganz oder teilweise fluorierte Sulfonsäuresalze der allgemeinen Formel (I). Beispielhaft seien Natrium- oder Kaliumperfluorbutansulfonat, Natrium- oder Kaliumperfluormethansulfonat, Natrium- oder Kalium-2,5-dichlorbenzolsulfonat, Natrium- oder Kalium-2,4,5-trichlorbezolsulfonat, Natrium- oder Kaliumdiphenylsulfonsulfonat und Natrium- oder Kalium-2-formylbenzolsulfonat genannt. Gemäß einer besonders bevorzugten Ausführungsform der Erfindung wird Kaliumperfluorbutansulfonat als Flammschutzmittel eingesetzt.
Besonders geeignete Flammschutzmittel sind ferner die in der US 4 727 101 beschriebenen Sulfonsäureamidsalze der allgemeinen Formel (II)

$$(Ar\text{-}SO_2\text{-}NR)_n^- \; M^{n+} \qquad (II)$$

worin

Ar ein aromatischer Rest und R ein monovalenter aliphatischer Rest ist oder

Ar und R zusammen einen divalenten aromatischen Rest bilden,

M ein beliebiges Kation ist und

n der Valenz von M entspricht.

Besonders bevorzugte Sulfonsäureamidsalze sind Natrium- und Kalium-(N-benzolsulfonyl)-benzolsulfonamid.
Als Flammschutzmittel kommen ferner aromatische Sulfonsäuresalze In Betracht. Insbesondere sind dies die in den US 3 940 366 und US 3 933 734 beschriebenen Metalisaize monomerer oder polymerer aromatischer Sulfonsäuren, die aus der US 3 953 399 bekannten Sulfonsäuresalze monomerer und polymerer aromatischer Carbonsäuren und deren Ester sowie die in den US 3 926 908 und US 4 104 246 beschriebenen Sulfonsäuresalze aromatischer Ketone.
Besonders geeignete aromatische Sulfonsäuresalze sind ferner die in der US 5 356 965 beschriebenen halogenfreien Sulfonsäuresalze aromatischer Aldehyde oder deren Acetalen. Diese sind insbesondere solche der allgemeinen Formel (III):

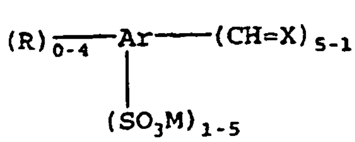

(III)

worin

Ar ein aromatischer Rest mit 1 bis 4 aromatischen Ringen ist,

M für ein Metall der Gruppen 1a, 1 b, 2a oder 2b des Periodensystems der Elemente steht,

R Wasserstoff, ein halogenfreies $C_1$-$C_6$-Alkyl, ein halogenfreies $C_6$-$C_{10}$-Aryl, ein halogenfreies $C_1$-$C_6$-Alkoxy, eine halogenfreie Acylamino- oder eine halogenfreie Acylimino-Gruppe ist und

X für Sauerstoff oder eine halogenfreie polyvalente Gruppe der Struktur R'-(-O-$)_{2-6}$ oder für zwei halogenfreie monovalente R'-O-Reste steht, wobei

R' ein gegebenenfalls verzweigter, halogenfreier $C_2$-$C_{20}$-Alkyl- bzw. -Alkylen-, halogenfreier $C_5$-$C_{10}$-Aryl- bzw. -Arylen- oder halogenfreier $C_7$-$C_{20}$-Aralkyl- bzw. -Aralkylen-Rest ist, der gegebenenfalls mehrere Struktureinheiten (III) verbindet.

Die erfindungsgemäßen Sulfonsäuresalze leiten sich von aromatischen, Aldehydgruppen tragenden Sulfonsäuren ab, die leicht nach bekannten Verfahren, beispielsweise aus den zugrundeliegenden Aldehyden durch Sulfonierung, aus aromatischen Halogenaldehyden durch Austausch des Halogens gegen die Sulfonatgruppe oder aus den Sulfonaten durch Formylierung hergestellt werden. Die flammschützende Wirkung wird sowohl von den Aldehyden selbst als auch von ihren, durch säurekatalysierte Umsetzung mit Alkoholen oder Phenolen unter Wasserabspaltung erhältlichen Acetalderivaten ausgeübt. Bei Verwendung von Monoalkoholen entstehen die acyclischen Acetate mit zwei Resten R' pro Aldehydgruppe; aus Diolen oder ortho-Diphenolen entstehen die einfachen cyclischen Acetate; bei Verwendung von Tri- oder Tetraalkoholen oder -phenolen werden jeweils zwei Aldehydgruppen über den Alkohol- oder Phenolrest miteinander verknüpft. Sind in dem aromatischen Sulfonat mehr als eine Aldehydgruppe enthalten oder im zur Acetalisierung verwendeten Alkohol oder Phenol mehr als zwei Hydroxygruppen, können die entsprechenden Acetate auch oligomerer oder polymerer Art sein.

Als aldehydgruppenhaltige Sulfonate können beispielsweise folgende Verbindungen in Form ihrer Metallsalze eingesetzt werden: 2-Formylbenzolsulfonsäure, 3-Formylbenzolsulfonsäure, 4-Formylbenzolsulfonsäure, 5-Formyl-2-methylbenzolsulfonsäure, 5-Formyl-2-methoxybenzolsulfonsäure, 5-Formyl-2-hexadecyloxy-benzolsulfonsäure, 2-Formylbenzol-1,5-disulfonsäure, 2,4-Diformylbenzolsulfonsäure, 2-Formyl-5-phenylbenzolsulfonsäure, Biphenyl-4'-formyl-4-sulfonsäure, Biphenyl-4,4'-bis-formyl-2,2'-disulfonsäure, 2-Formyl-5-phenylbenzolsulfonsäure, Biphenyl-4'-formyl-4-sulfonsäure, Biphenyl-4,4'-bis-formyl-2,2'-disulfonsäure, 2-Formyl-5-(acetylamino)benzolsulfonsäure oder 2-Formyl-5-(phthalimino)benzolsulfonsäure, oder deren Acetate, die beispielsweise durch Umsetzung der obengenannten Aldehyde mit folgenden Hydroxyverbindungen erhältlich sind: Methanol, Ethanol, n-Propanol, n-Butanol, Isobutylalkohol, Isopentylalkohol, 2-Ethylhexanol, Benzylalkohol, 2-Phenylethanol, 3-Phenyl-1-propanol, Ethylenglycol, Propylenglycol, 1,3-Propandiol, 1,2-Butylenglycol, 1,3-Butandiol, 2,3-Butandiol, Neopentylglycol, 2,5-Hexandiol, 2-Methyl-2-propyl-1,3-propandiol, 2,2-Diethyl-1,3-propandiol, Glycerin, 2-Hydroxymethyl-2-methyl-1,3-propandiol, 1,1,1-Trimethylolpropan, Pentaerythrit, Sorbit, Mannit, 1,2-Cyclohexandiol, 1,4-Cyclohexandimethanol, Bis-hydroxymethyl-hexahydro-4,7-methanoindan, Brenzcatechin, 1,4-Bis(2-hydroxyethoxy)benzol, 4-tert.-Butylbrenzkatechin, 2,3-Naphthalindiol, 1,8-Naphthalindiol, 2,2'-Dihydroxybiphenyl, 3,4-Dihydroxybiphenyl, 2,2-Bis(4-hydroxyphenyl)propan, 2,2-Bis(4-(2-hydroxyethoxy)phenyl)propan oder 2,2-Bis(4-(2,3-dihydroxypropoxy)phenyl)propan, Glycerin-1-phenylether, Glycerin-1-(nonylphenyl)ether, Glycerin-1-(p-cumylphenyl)ether, 2,2-Bis(4-(2,3-dihydroxypropoxy) phenyl)propan und Stearylalkohol.

Das Metallkation der Sulfonate kann aus den Gruppen 1 a,b oder 2a,b des Periodensystems stammen. Insbesondere kommen Lithium, Natrium, Kalium, Magnesium, Calcium und Zink in Betracht. Bevorzugt sind Alkali- und Erdalkalimetalle.

Der Anteil der erfindungsgemäßen Sulfonsäuresalze in der thermoplastischen Formmasse kann in weiten Grenzen variiert werden. Oberhalb von 10 Gew.-% treten jedoch unerwünschte Veränderungen der physikalischen Eigenschaften der Formmasse auf, während bei Zusatzmengen unter 0,005 Gew.-% die flammschützende Wirkung verloren geht. Da die flammschützende Wirkung bereits mit sehr geringen Zusatzmengen erreicht wird, werden die erfindungsgemäßen Sulfonsäuresalze bevorzugt in Mengen zwischen 5 und 0,01 Gew.-% zugesetzt.

Vorzugsweise als Flammschutzmittel geeignet sind ebenfalls alle üblicherweise hierfür verwendeten Phosphorverbindungen, insbesondere Phosphinoxide und Derivate von Säuren des Phosphors und Salze von Säuren und Säurederivaten des Phosphors.

Bevorzugt werden Derivate (z.B. Ester) von Säuren des Phosphors und deren Salze eingesetzt, wobei Säuren des Phosphors Phosphorsäure, Phosphonsäure, Phosphinsäure, phosphorige Säure, auch jeweils in dehydratisierter Form, einschließt, Salze bevorzugt Alkali-, Erdalkali- und Ammoniumsalze dieser Säuren sind und auch deren Derivate (beispielsweise teilveresterte Säuren) eingeschlossen sind.

Besonders geeignet sind ferner Phosphorsäureestersalze der allgemeinen Formel (IV)

$$PO(OM)_a(OR)_b \quad (IV)$$

worin

M ein beliebiges Metall,

R ein geradkettiger oder verzweigter aliphatischer Rest mit 1 bis 30 Kohlenstoffatomen oder ein aromatischer Rest mit 6 bis 30 Kohlenstoffatomen, in denen die Wasserstoffatome ganz oder teilweise halogeniert sein können und a+b=3 ist.

Bevorzugte Beispiele für solche Verbindungen sind Natrium- oder Kaliummethylphosphonat, Natrium- oder Kalium-(2-phenylethylen)-phosphonat und Lithiumphenylphosphonat.
Weitere bevorzugte organische Phosphorverbindungen sind die in der US 4 495 111 beschriebenen Phosphorsäurehalbester.
Bevorzugte organische Phosphorverbindungen sind ferner solche der allgemeinen Formel (V)

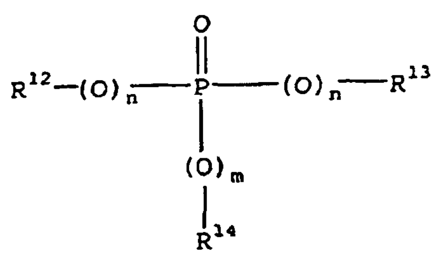

(V)

in denen

$R^{12}$, $R^{13}$ und $R^{14}$ unabhängig voneinander ein gegebenenfalls halogeniertes $C_1$-$C_8$-Alkyl oder ein gegebenenfalls halogeniertes und/oder alkyliertes $C_5$- oder $C_6$-Cycloalkyl oder ein gegebenenfalls halogeniertes und/oder alkyliertes und/oder aralkyliertes $C_6$-$C_{30}$-Aryl und
N und M unabhängig voneinander 0 oder 1 sind.

Diese Phosphorverbindungen sind generell bekannt und beispielsweise in Ullmann, "Enzyklopädie der technischen Chemie", Band 18, Seiten 301 ff, 1979 beschrieben. Die aralkylierten Phosphorverbindungen sind beispielsweise in der DE-OS 38 24 356 beschrieben.
Die gegebenenfalls halogenierten und/oder alkylierten und/oder aralkylierten $C_6$-$C_{30}$-Arylreste in Formel (V) sind gegebenenfalls ein oder mehrkemig, einfach oder mehrfach halogeniert und/oder alkyliert und/oder aralkyliert, z. B. Chlorphenyl, Bromphenyl, Pentachlorphenyl, Pentabromphenyl, Phenyl, Kresyl, Isopropylphenyl, benzylsubstituiertes Phenyl und Napthyl.
Erfindungsgemäß einsetzbare Phosphorverbindungen der Formel (V) sind beispielsweise Tributylphosphat, Tris-(2-chlorethyl)phosphat, Tris-(2,3-dibmmpropyl)phosphat, Triphenylphosphat, Trikresylphosphat, Diphenylkresylphosphat, Diphenyloctylphosphat, Diphenyl-2-ethylkresylphosphat, Tri-(isopropyl-phenyl)phosphat, Tris-(p-benzylphenyl)phosphat, Triphenylphosphinoxid, Methanposphonsäuredimethylester, Methanphosphonsäure-diphenylester und Phenylphosphonsäurediethylester.
Geeignete Flammschutzmittel sind ferner die in der EP 0 363 608 A beschriebenen oligomeren Phosphorverbindungen der Formel (VI),

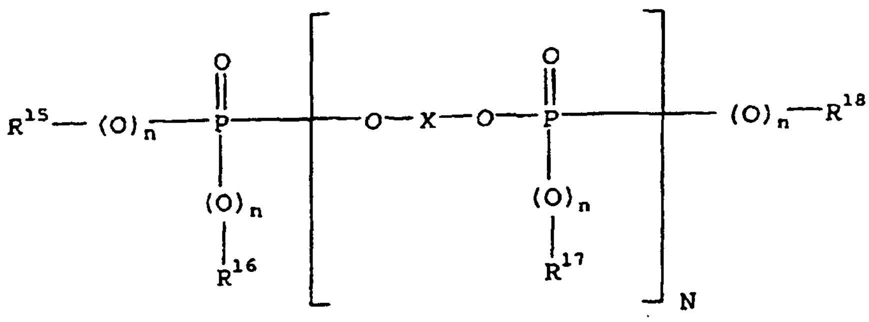

(VI)

worin

| | |
|---|---|
| $R^{15}$, $R^{16}$, $R^{17}$, $R^{18}$ | unabhängig voneinander $C_1$-$C_{18}$-Alkyl, vorzugsweise Methyl, $C_5$-$C_6$-Cycloalkyl, $C_6$-$C_{10}$-Aryl, vorzugsweise Phenyl, $C_7$-$C_{12}$-Aralkyl, vorzugsweise Phenyl-$C_1$-$C_4$-alkyl, |
| n | unabhängig voneinander 0 oder 1, |
| N | 1 bis 5 und |
| X | einen ein- oder mehrkernigen aromatischen Rest mit 6 bis 30 C-Atomen bedeuten; vorzugsweise abgeleitet von Bisphenol A, Hydrochinon oder Resorcin. |

Das Molekulargewicht der Phosphorverbindungen der Formel (VI) ist im allgemeinen kleiner 2000 g/Mol., vorzugsweise kleiner 1000 g/Mol.

Die gegebenenfalls halogenierten $C_1$-$C_8$-Alkylreste in den Formeln (V) und (VI) können einfach oder mehrfach halogeniert, linear oder verzweigt sein. Beispiele für Alkylreste sind Chlorethyl, 2-Chlorpropyl, 2,3-Dibrompropyl, Butyl, Methyl oder Octyl.

Die gegebenenfalls halogenierten und/oder alkylierten $C_5$- oder $C_6$-Cycloalkylreste in den Formeln (V) und (VI) sind gegebenenfalls einfach bis mehrfach halogenierte und/oder alkylierte $C_5$- oder $C_6$-Cycloalkylreste, wie Cyclopentyl, Cyclohexyl, 3,3,3-Trimethylcyclohexyl und Perchlorocyclohexyl.

Bei Mischungen mehrerer Phosphate der Formel (VI) stellt N einen Mittelwert zwischen 1 und 5 dar. Bevorzugte Flammschutzmittel sind auch Mischungen aus Phosphorverbindungen der Formel (V) und Phosphorverbindungen der Formel (VI).

Geeignete Flammschutzmittel sind ferner halogenierte Benzoesäuresalze wie Natrium- oder Kaliumpentachlorbenzoat, Natrium- oder Kalium-2,4,6-trichlorbenzoat und Natrium- oder Kalium-2,4-dichlorbenzoat sowie Hexafluoroaluminate wie Natrium- oder Kaliumhexafluoroantimonat.

Weiterhin können halogenhaltige Flammschutzmittel wie chlorierte und bromierte Diphenyle, wie Octachlordiphenyl, Decachlordiphenyl, Octabromdiphenyl, Decabromdiphenyl; chlorierte und bromierte Diphenylether, wie Octa- und Decachlordiphenylether und Octa- und Decabromdiphenylether; chloriertes und bromiertes Phthalsäureanhydrid und seine Derivate, wie Phthalimide und Bisphthalimide, z.B. Tetrachlor- und Tetrabromphthalsäureanhydrid, Tetrachlor- und Tetrabromphthalimid, N,N'-Ethylen-bis-tetrachlor und N,N'-Ethylen-bis-tetrabromphthalimid, N-Methyltetrachlor- und N-Methyltetrabromphthalimid; chlorierte und bromierte Bisphenole, wie 2,2-Bis(3,5-di-chlor-4-hydroxyphenyl) propan und 2,2-Bis(3,5-dibrom-4-hydroxyphenyl)propan; 2,2-Bis(3,5-di-chlor-4-hydroxyphenyl)propanoligocarbonat und 2,2-Bis(3,5-di-chlor-4-hydroxphenyl) propanoligocarbonat mit einem mittleren Polykondensationsgrad ($M_n$) von 2 bis 20. Bromverbindungen werden gegenüber den Chlorverbindungen bevorzugt.

Bei bestimmten Anforderungen an den Flammschutz können die Formmassen zusätzlich fluorierte Kohlenwasserstoffe, insbesondere fluorierte Polyolefine enthalten. Erfindungsgemäß wurde festgestellt, daß diese in Verbindung mit nanoteiligen Erdalkalisulfaten und bekannten Flammschutzmitteln eine synergistische Wirkung hinsichtlich der flammhemmenden Eigenschaften der thermoplastischen Formmassen entfalten. Die verwendbaren fluorierten Polyolefine sind hochmolekular und besitzen Glasübergangstemperaturen von über -30°C, in der Regel von über 100°C. Die Fluorgehalte der fluorierten Polyolefine betragen vorzugsweise 65 bis 76 Gew.-%, insbesondere von 70 bis 76 Gew.-%. Der mittlere Teilchendurchmesser $d_{50}$ der fluorierten Polyolefine beträgt von 0,05 bis 1000 μm, vorzugsweise 0,08 bis 20 μm. Im allgemeinen haben die fluorierten Polyolefine eine Dichte von 1,2 bis 2,3 g/cm$^3$. Bevorzugte fluorierte Polyolefine sind Polytetrafluorethylen, Polyvinyliden-fluorid, Tetrafluorethylen/Hexafluorpropylen- und Ethylen/Tetrafluorethylen-Copolymerisate. Derartige fluorierte Polyolefine sind beispielsweise in Schildknecht "Vinyl- und Related Polymer", John Wiley & Sons, Inc. New York, 1962, S. 484-494; Wall "Fluoropolymers", Wiley-Interscience, John Wiley & Sons, Inc. New York, Band 13, 1970, S. 623-654; "Modern Plastics Encyclopedia", 1970-1971, Band 47, Nr. 10 A, Oktober 1970, Mc Graw-Hill, Inc., New York, S. 134 und 774; "Modern Plastics Encyclopedia", 1975-1976, Oktober 1975, Band 52, Nr. 10 A, Mc Graw-Hill, Inc., New York, S. 27, 28 und 472 sowie in den US 3 671 487, US 3 723 373 und US 3 838 092 beschrieben.

Die Menge der einzusetzenden fluorierten Kohlenwasserstoffe in der thermoplastischen Formmasse hängt von den gewünschten Materialeigenschaften ab und kann in weiten Grenzen variiert werden. Vorzugsweise beträgt die Menge der fluorierten Polyolefine 0,001 bis 0,5 Gew.-%, insbesondere 0,01 bis 0,1 Gew.-%, bezogen auf das Gesamtgewicht der Formmasse.

Gemäß einer besonders vorteilhaften Ausführungsform der Erfindung wird als fluorierter Kohlenwasserstoff Polytetrafluorethylen eingesetzt. Ein besonders gutes Flammschutzverhalten der Formmasse ohne Verschlechterung der übrigen Materialeigenschaften wird erzielt, wenn Polytetrafluorethylen in einer Menge von 0,001 bis 0,5 Gew.-%, insbesondere 0,01 bis 0,1 Gew.-%, bezogen auf das Gesamtgewicht der Formmasse eingesetzt wird.

Amorphe thermoplastische Polymere im Sinne dieser Erfindung sind sämtliche amorphe Thermoplasten, insbesondere amorphe Polyester und amorphe Polyolefine sowie jeweils deren Copolymere und Polymerblends. Erfindungsgemäß einzusetzende amorphe Polyester sind insbesondere Polycarbonate. Amorphe Polyolefine schließen sowohl offenkettige Polyolefine wie Polypropylen und amorphc Polystyrole als auch Cycloolefinpolymere ein.

Gemäß einer besonders bevorzugten Ausführungsform der Erfindung werden Polycarbonate als Polymere eingesetzt. Erfindungsgemäß geeignete Polycarbonate sind sowohl Homopolycarbonate als auch Copolycarbonate. Auch eine Mischung der erfindungsgemäß geeigneten Polycarbonate kann verwendet werden. Die Polycarbonate können teilweise oder vollständig durch aromatische Polyestercarbonate ersetzt werden. Die Polycarbonate können auch Polysiloxan-Blöcke enthalten. Deren Herstellung wird beispielsweise in den US 3 821 325, US 3 189 662 und US 3 832 419 beschrieben. Den Polycarbonaten können andere Polymere zugemischt werden, wodurch sogenannte Polymerblends erhalten werden. Beispielsweise können Blends aus den erfindungsgemäß ausgerüsteten Polycarbonaten und ABS-Polymeren oder aus den erfindungsgemäß flammwidrig ausgerüsteten Polycarbonaten und Polyestern wie Polyethylenterephthalat oder Polybutylenterephthalat hergestellt werden.

Die erfindungsgemäß flammwidrig auszurüstenden thermoplastischen Polycarbonate haben mittlere Molekulargewichte $\overline{M}_w$ von 10.000 bis 200.000 g/Mol., vorzugsweise 15.000 bis 45.000 g/Mol., noch bevorzugter 18.000 bis 35.000 g/Mol., ermittelt durch Messung der relativen Viskosität bei 25°C in $CH_2Cl_2$ und bei einer Konzentration von 0,5 g pro 100 ml $CH_2Cl_2$; sie können geradkettig oder verzweigt sein. Derartige thermoplastische Polycarbonate sind literaturbekannt oder nach literaturbekannten Verfahren herstellbar.

Zur Herstellung von Polycarbonaten sei beispielhaft auf H. Schnell, "Chemistry and Physics of Polycarbonates", Polymer Reviews, Vol. 9, Interscience Publishers, New York, London, Sydney 1964, auf D.C. Prevorsek, B.T. Debona and Y. Kesten, Corporate Research Center, Allied Chemical Corporation, Morristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren, dem Pyridinverfahren oder dem Schmelzumesterungsverfahren.

Als Ausgangsverbindungen zur Herstellung von Polycarbonaten bevorzugt einzusetzende Verbindungen sind Bisphenole der allgemeinen Formel HO-Z-OH, worin Z ein divalenter organischer Rest mit 6 bis 30 Kohlenstoffatomen ist, der eine oder mehrere aromatische Gruppen enthält. Beispiele solcher Verbindungen sind Bisphenole, die zu der Gruppe der Dihydroxydiphenyle, Bis(hydroxyphenyl)alkane, Bis(hydroxyphenyl)cycloalkane, Indanbisphenole, Bis(hydroxyphenyl)sulfide, Bis(hydroxyphenyl)ether, Bis(hydroxyphenyl)sulfone, Bis(hydroxyphenyl)sulfoxide, Bis(hydroxyphenyl)ketone und α,α'-Bis(hydroxyphenyl)diisopropylbenzole gehören.

Bevorzugte Bisphenole, die zu den vorgenannten Verbindungsgruppen gehören, sind Hydrochinon, Resorcin, 4,4'-Dihydroxydiphenyl, Bis(4-hydroxyphenyl) sulfid, Bis(4-hydroxyphenyl)sulfon, Bis(3,5-dimethyl-4-hydroxyphenyl) methan, Bis(3,5-dimethyl-4-hydroxyphenyl) sulfon, 1,1-Bis(3,5-dimethyl-4-hydroxyphenyl)-p/mdiisopropylbenzol, 1,1-Bis(4-hydroxyphenyl)-1-phenyl-ethan, 1,1-Bis(3,5-dimethyl-4-hydroxyphenyl)cyclohexan, 1,1-Bis(4-hydroxyphenyl)-3-methylcyclohexan, 1,1-Bis(4-hydroxyphenyl)-3,3-dimethylcyciohexan, 1,1-Bis(4-hydroxyphenyl)-4-methylcyclohexan, 1,1-Bis(4-hydroxyphenyl)cyclohexan, 1,1-Bis(4-hydroxyphenyl)-3,3,5-trimethylcyclohexan, 2,2-Bis(3,5-dichlor-4-hydroxyphenyl)propan, 2,2-Bis(3-methyl-4-hydroxyphenyl)propan, 2,2-Bis(3,5-dimethyl-4-hydroxyphenyl)propan, 2,2-Bis(4-hydroxyphenyl)propan ("Bisphenol A"), 2,2-Bis(3-chlor-4-hydroxyphenyl)propan, 2,2-Bis(3,5-dibrom-4-hydroxyphenyl) propan, 2,4-Bis(4-hydroxyphenyl)-2-methylbutan, 2,4-Bis(3,5-dimethyl-4-hydroxyphenyl)-2-methylbutan, α,α'-Bis(4-hydroxyphenyl)-o-diisopropylbenzol, α,α'-Bis(4-hydroxyphenyl)-m-diisopropylbenzol ("Bisphenol M"), α,α'-Bis(4-hydroxyphenyl)-p-diisopropylbenzol und Indanbisphenol sowie gegebenenfalls deren Gemische.

Besonders bevorzugte Polycarbonate sind das Homopolycarbonat auf Basis von Bisphenol A, das Homopolycarbonat auf Basis von 1,1-Bis(4-hydroxyphenyl)-3,3,5-trimethylcyclohexan und die Copolycarbonate auf Basis der Monomere Bisphenol A und 1,1-Bis(4-hydroxyphenyl)-3,3,5-trimethylcyclohexan.

Die erfindungsgemäß einzusetzenden Bisphenole werden mit Kohlensäureverbindungen, insbesondere Phosgen, umgesetzt.

Polyestercarbonate werden durch Umsetzung der bereits genannten Bisphenole, mindestens einer aromatischen Dicarbonsäure und gegebenfalls Kohlensäure erhalten. Geeignete aromatische Dicarbonsäuren sind beispielsweise Orthophthalsäure, Terephthalsäure, Isophthalsäure, 3,3'- oder 4,4'-Diphenyldicarbonsäure und Benzophenondicarbon-säuren. Bis zu 80 Mol. %, vorzugsweise etwa 20 bis 50 Mol. % der Carbonatgruppen in den Polycarbonaten können durch aromatische Dicarbonsäureester-Gruppen ersetzt sein.

Das mittlere Molekulargewicht $\overline{M}_w$ der erfindungsgemäßen Polycarbonate kann in bekannter Weise durch Kettenabbrecher eingestellt werden. Die Kettenabbrecher können einzeln oder als Mischung verschiedener Kettenabbrecher eingesetzt werden.

Geeignete Kettenabbrecher sind beispielsweise Monophenole und Monocarbonsäuren. Geeignete Monophenole sind beispielsweise Phenol, p-Chlorphenol, p-tert.-Butylphenol, Cumylphenol oder 2,4,6-Tribromphenol sowie langkettige Alkylphenole wie 4-(1,1,3,3-Tetramethylbutyl)phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethylheptyl)phenol oder 4-(3,5-Dimethyl-heptyl)phenol. Geeignete Monocarbonsäuren sind beispielsweise Benzoesäure, Alkylbenzoesäuren und Halogenbenzoesäuren.

Bevorzugte Kettenabbrechersind Phenol, p-tert.-Butylphenol, 4-(1,1,3,3-Tetramethylbutyl)phenol und Cumylphenol.

Die Menge an Kettenabbrechern beträgt bevorzugt zwischen 0,25 und 10 Mol. %, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri(4-hydroxyphenyl)hept-2-en, 4,6-Dimethyl-2,4,6-tri(4-hydroxyphenyl)heptan, 1,3,5-Tri-(4-hydroxyphenyl)benzol, 1,1,1-Tris(4-hydroxyphenyl)ethan, Tri(4-hydroxyphenyl)-phenylmethan, 2,2-Bis[4,4-bis-(4-hydroxyphenyl)cyclohexyl]propan, 2,4-Bis(4-hydroxyphenylisopropyl)phenol, 2,6-Bis(2-hydroxy-5'-methyl-benzyl)-4-methylphenol, 2-(4-Hydroxyphenyl)-2-(2,4-dihydroxyphenyl) propan, Hexa-(4-(4-hydroxyphenylisopropyl)phenyl)terephthalsäureester, Tetra(4-hydroxyphenyl) methan, Tetra (4-(4-hydroxyphenylisopropyl)phenoxy)methan und 1,4-Bis(4',4"-dihydroxytriphenyl)methylbenzol sowie 2,4-Dihydroxybenzoesäure, Trimesinsäure, Cyanurchlorid, 3,3-Bis(3-methyl-4-hydroxyphenyl)-2-oxo-2,3-dihydroindol, Trimesinsäuretrichlorid und α,α',α"-Tris(4-hydroxyphenol)-1,3,5-triisopropylbenzol.

Bevorzugte Verzweiger sind 1,1,1-Tris(4-hydroxyphenyl) ethan, 3,3-Bis(3-methyl-4-hydroxyphenyl)-2-oxo-2,3-dihydroindol und Isatinbiscresol.

Die Menge der gegebenenfalls einzusetzenden Verzweiger beträgt bevorzugt 0,05 Mol. % bis 2 Mol. %, bezogen auf Mole an eingesetzten Bisphenolen.

Die Verzweiger können zum Beispiel im Falle der Herstellung des Polycarbonats nach dem Phasengrenzflächenverfahren mit den Bisphenolen und den Kettenabbrechern in der wäßrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Zur Herstellung der Polycarbonate nach dem Phasengrenzflächenverfahren werden die Bisphenole in wäßriger alkalischer Phase, vorzugsweise Natronlauge, gelöst. Die gegebenenfalls zur Herstellung von Copolycarbonaten erforderlichen Kettenabbrecher werden in Mengen von 1,0 bis 20,0 Mol-% je Mol. Bisphenol, in der wässrigen alkalischen Phase gelöst oder zu dieser in einer inerten organischen Phase in Substanz zugegeben. Anschließend wird Phosgen in den die übrigen Reaktionsbestandteile enthaltenden Mischer eingeleitet und die Polymerisation durchgeführt. Nach der Reaktion wird die organisch, das Polycarbonat enthaltende Phase von der wäßrigen Phase getrennt, mehrmals gewaschen und das Polycarbonat anschließend isoliert.

Im Phasengrenzflächenverfahren verwendbare organische Lösungsmittel sind beispielsweise Dichlormethan, die verschiedenen Dichlorethane und Chlorpropanverbindungen, Chlorbenzol und Chlortoluol. Vorzugsweise werden Dichlormethan und Gemische aus Dichlormethan und Chlorbenzol eingesetzt.

Im Phasengrenzflächenverfahren kann die Reaktion durch Katalysatoren wie tertiäre Amine, N-Alkylpiperidine oder Oniumsalze beschleunigt werden. Bevorzugt werden Tributylamin, Triethylamin und N-Ethylpiperidin verwendet.

Die erfindungsgemäßen Formmassen können femergeeignete Additive wie Entformungsmittel, UV-Absorber, Stabilisatoren, Gleitmittel, Antistatika, Füllstoffe und/oder Verstärkungsstoffe, Antioxidantien, Pigmente, Farbmittel, und fein zerteilte Mineralien enthalten. Die Einarbeitung der Zusätze in das amorphe thermoplastische Polymer erfolgt in bekannter Weise durch Vermischen von Polymergranulat mit den Zusätzen und anschließender Extrusion oder durch Vermischen der Lösungen des Polymers mit Lösungen der Additive und anschließende Verdampfung der Lösungsmittel in bekannter Weise. Der Anteil der Additive in der thermoplastischen Formmasse kann in weiten Grenzen variiert werden und richtet sich nach den gewünschten Eigenschaften der Formmasse. Der Gesamtanteil der Additive in der Formmasse beträgt bevorzugt 0 bis 20 Gew.-%, noch bevorzugter 0 bis 5 Gew.-%, bezogen auf das Gewicht der Formmasse.

Beispiele für Entformungsmittel sind Calciumstearat, Zinkstearat, Glycerinmonostearat und Pentaerythrit-tetrastearat; bevorzugte Entformungsmittel sind Glycerinmonostearat und Pentaerythrittetrastearat.

Insbesondere bei Verwendung zur Herstellung von Formteilen für den Bausektor, wie Fenstern oder Platten, können den Formmassen UV-Absorber zugesetzt werden. Geeignete UV-Absorber sind solche Verbindungen, die aufgrund ihres Absorptionsvermögens unterhalb 400 nm in der Lage sind, Polycarbonat wirksam vor UV-Licht zu schützen und ein Molekulargewicht von mehr als 370, vorzugsweise von 500 und mehr aufweisen. Derartige UV-Absorber sind beispielsweise in der EP 0 500 496 A1 beschrieben.

Geeignete Stabilisatoren für amorphe thermoplastische Polymere sind beispielsweise Phosphine, Phosphite oder Silicium enthaltende Stabilisatoren sowie weitere in der EP 0 500 496 A1 beschriebene Verbindungen. Beispielhaft seien Triphenylphosphite, Diphenylalkylphosphite, Phenyldialkylphosphite, Tris(nonylphenyl)-phosphit, Tetrakis (2,4-di-tert.-butylphenyl)-4,4'-biphenylen-diphosphonit und Triphenylphosphit genannt.

Beispiele für Gleitmittel sind Kohlenwasserstoffe (z.B. Paraffinöle, Polyethylenwachse), Alkohole (z.B. Stearylalkohol), Carbonsäuren (z.B. Laurinsäure, Palmitinsäure, Stearinsäure), Carbonsäureamide (z.B. Stearinsäureamid, Ethylendiaminbisstearylamid), Carbonsäureester (z.B. n-Butylstearat, Stearylstearat, Glycerinmonostearat, Glycerintristearat, Pentaerythrittetrastearat); bevorzugte Gleitmittel sind Carbonsäureamide und Carbonsäureester.

Beispiele für Antistatika sind kationaktive Verbindungen (z.B. quartäre Ammonium-, Phosphonium- oder Sulfoniumsalze), anionaktive Verbindungen (z.B. Alkylsulfonate, Alkylsulfate, Alkylphosphate, Carboxylate in Form von Alkali- oder Erdalkalimetallsalzen), nichtionogene Verbindungen (z.B. Polyethylenglykolester, Polyethylenglykolether, Fettsäureester, ethoxylierte Fettamine); bevorzugte Antistatika sind nichtionogene Verbindungen.

Bevorzugte Füllstoffe sind Glaskugeln, Glimmer, Silikate, Quarz, Talkum, Titandioxid oder Wollastonit. Bevorzugte Verstärkungsstoffe sind Glas- oder Kohlefasem.

Die erfindungsgemäßen Formmassen können hergestellt werden, indem man die jeweiligen Bestandteile in bekannter Weise vermischt und bei Temperaturen von etwa 200°C bis 330°C in üblichen Aggregaten wie Innenknetern, Extrudern und Doppelwellenschnecken schmelzcompoundiert oder schmelzextrudiert.

Die Vermischung der einzelnen Bestandteile kann in bekannter Weise sowohl sukzessive als auch simultan erfolgen und zwar sowohl bei Raumtemperatur als auch bei erhöhter Temperatur.

Gegenstand der Erfindung sind auch Formkörper, die mit den erfindungsgemäßen Formmassen hergestellt werden. Die Formmassen können zur Erzeugung von massiven Kunststoffplatten und sogenannten Hohlkörperplatten oder Stegplatten (Stegdoppelplatten) eingesetzt werden. Diese Formkörper werden durch Extrusion oder Coextrusion hergestellt. Die Platten umfassen auch solche, die auf einer Seite eine zusätzliche Deckschicht aufweisen, die beispielsweise besonders witterungsfest ausgebildet ist. Durch Spritzguß können Formteile erhalten werden wie Gehäuse aller Art für elektrische und mechanische Apparate, wie Haushaltsgeräte wie Saftpressen, Kaffeemaschinen, Mixer, Büromaschinen sowie Formteile für den Fahrzeugbau. Die Formteile können wegen ihrer guten elektrischen Eigenschaften außerdem auf dem Gebiet der Elektrotechnik eingesetzt werden. Die Formkörper können in bekannter Weise durch Extrusion oder Spritzguß hergestellt werden. Als Formkörper kommen ferner Folien in Betracht.

Die Formkörper können ferner unter Verwendung von Ausschußware (Rezyklat) der erfindungsgemäßen Formmassen hergestellt werden. Hierzu wird Ausschußware wie Gehäuse-oder Plattenabfälle, die aus der erfindungsgemäßen Formmasse hergestellt ist, in geeigneter Weise, beispielsweise durch Schreddern, zerkleinert und anschließend in bekannter Weise als solche oder unter Zumischung von nichtrezyklierter Formmasse zu Formkörpern verar-<SHY>verarbeitet.

Im folgenden wird die Erfindung durch Ausführungs-beispiele weiter erläutert.

**<u>Beispiele</u>**

**a) Herstellung der Formmassen**

Die in Tabelle 1 angegebenen Polycarbonatformmassen wurden durch Extrudieren von aromatischem Polycarbonat Makrolon® 2808 natur der Bayer AG auf Basis von Bisphenol A mit einem mittleren Molekulargewicht ($M_w$ nach GPC, geeicht auf PC) von 30.000 bei 300°C auf einem Zweiwellenextruder mit den angegebenen Mengen Additiven und anschließendes Granulieren hergestellt. Als Bariumsulfat wurde Sachtoperse® HU-N Spezial der Sachtleben Chemie GmbH, 47184 Duisburg verwendet. Dieses wies eine mittlere Teilchengröße von 100 bis 150 nm (eincompoundiert im Polycarbonat) auf. Die Teilchengröße wurde durch Ultrazentrifugation nach Langer, H. "Particle and particle size characterization", Bd. 12, S.148,1995 bestimmt. Als Entformungsmittel wurde Glycerinmonostearat (GMS) oder Pentaerytrittetrastearat (PETS) verwendet. Als Polytetrafluorethylen wurde Hostaflon® (TF 2021) der Hoechst AG eingesetzt. Das Granulat wurde im Vakuumtrockenschrank bei 100 bis 120°C getrocknet.

Tabelle 1

| **Zusammensetzung der Formmassen** | | | | | | | |
|---|---|---|---|---|---|---|---|
| Beispiel | Polycarbonat Gew.-% | $C_4F_9SO_3$ K Gew.-% | $BaSO_4$ Gew.-% | GMS Gew.-% | PETS Gew.-% | Saccharin Gew.-% | Hostaflon® TF 2021 Gew.-% |
| 1 | 99,45 | 0,08 | - | - | - | - | - |
| 2 | 99,92 | 0,08 | - | - | 0,47 | - | - |
| 3 | 99,37 | 0,08 | 0,08 | - | 0,47 | - | - |
| 4 | 99,81 | 0,12 | 0,06 | 0,0003 | - | 0,0003 | - |
| 5 | 99,25 | 0,50 | 0,25 | 0,0012 | - | 0,0012 | - |
| 6 | 99,24 | 0,38 | 0,38 | 0,0019 | - | 0,0019 | - |
| 7 | 99,00 | 0,33 | 0,66 | 0,0034 | - | 0,0034 | - |
| 8 | 98,50 | 0,25 | 1,24 | 0,0062 | - | 0,0062 | - |
| 9 | 99,27 | 0,20 | - | - | 0,47 | - | 0,06 |
| 10 | 98,47 | 0,20 | 0,80 | - | 0,47 | - | 0,06 |

**b) Flammschutzverhalten**

Die in den Beispielen 1 bis 10 erhaltenen Granulate wurden mit einer Spritzgußmaschine bei einer Massetemperatur von 300°C zu Prüfstäben mit den Kantenlängen 127 x 12,7 mm und den in Tabelle 2 angegebenen Schichtdicken verspritzt. Die Prüfstäbe wurden dann einer Brennbarkeitsprüfung gemäß der Vorschrift UL-94 (Brennbarkeit fester Kunststoffproben, Underwriters Labaratories, Northbrook, Illinois, USA) unterworfen und den UL-94 Brennbarkeitsklassen V0, V1 und V2 beziehungsweise "nicht bestanden" zugeordnet. Für die in Beispiel 9 und 10 hergestellten Formmassen wurde ferner eine Stabprüfung nach der Vorschrift UL-94 5V (Brennbarkeit fester Proben) durchgeführt. Die Ergebnisse der Brennbarkeitsprüfungen für die Formmassen der Beispiele 1 bis 10 sind in Tabelle 2 zusammengefaßt.

Tabelle 2

| **Flammschutzverhalten** | | | | |
|---|---|---|---|---|
| Beispiel | Schichtdicke | UL-94 Test | UL-94 5V -Stabprüfung | UL-94 VTM |
| 1 | 3,2 mm | V0 | - | - |
| | 2,6 mm | V0 | - | - |
| | 2,4 mm | V0 | - | - |
| 2 | 3,2 mm | V0 | - | - |
| | 2,6mm | V1 | - | - |
| | 2,4 mm | V2 | - | - |
| 3 | 3,2 mm | V0 | - | - |
| | 2,6 mm | V0 | - | - |
| | 2,4 mm | V0 | - | - |
| 4 | 0,25 mm | - | - | VTM O |

Tabelle 2 (fortgesetzt)

| Flammschutzverhalten | | | | |
|---|---|---|---|---|
| Beispiel | Schichtdicke | UL-94 Test | UL-94 5V -Stabprüfung | UL-94 VTM |
| 5 | 2,4 mm | V0 | - | - |
| 6 | 2,4 mm | V0 | - | - |
| 6 (Rezyklat) | 2,0 mm | V0 | - | - |
| 7 | 2,4 mm | V0 | - | - |
| 8 | 2,4 mm | V0 | - | - |
| 9 | 2,8 mm<br><br>0,8 mm | -<br><br>V0 | nicht bestanden<br>- | -<br><br>- |
| 10 | 2,8 mm<br>2,4 mm<br>0,8 mm | -<br>-<br>V0 | bestanden<br>bestanden<br>- | -<br>-<br>- |
| 10 (Rezyklat) | 0,8 mm | V0 | - | - |
| - = Test nicht durchgeführt | | | | |

Die Beispiele 1 bis 3 in Tabelle 2 zeigen, daß der Zusatz von nanoskaligem Bariumsulfat insbesondere in Gegenwart von Entformungsmitteln wie PETS bei einer Schichtdicke von 2,4 mm eine deutlich verbesserte Flammschutzwirkung aufweist.

Die in Beispiel 4 unter Zusatz von Kaliumperfluorbutan-sulfonat und Bariumsulfat in Gegenwart von GMS als Entformungsmittel und Saccharin hergestellte Formmasse weist selbst nach Verarbeiten zu einer Folie mit einer Dicke von 0,25 mm ein ausgezeichnetes Flammschutzverhalten auf und wurde nach dem Beflammungstest UL-94 VTM (Brennbarkeit von Folien) in die Klasse VTM 0 eingestuft. Ein weiterer Vorteil der in Beispiel 4 hergestellten Folien ist ihre Transparenz.

Aus den Beispielen 5 bis 8 in Tabelle 2 geht ferner hervor, daß der Zusatz von nanoskaligem Bariumsulfat auch in Gegenwart von GMS als Entformungsmittel bei einer Schichtdicke von 2,4 mm eine hervorragende Flammschutzwirkung aufweist und sämtlich mit V0 gemäß UL-94 eingestuft wurden.

Beispiele 5 und 6 zeigen, daß sich die Brandschutzwirkung von Kaliumperfluorbutansulfonat in Verbindung mit Bariumsulfat durch Zusatz von fluorierten Kohlenwasserstoffen wie Hostaflon® TF 2021 noch weiter verbessern läßt. Die Formmassen der Beispiele 5 und 6 werden selbst bei einer Schichtdicke von 0,8 mm in die UL-94 Brennbarkeitsklasse V0 eingestuft. Die Beispiele 5 und 6 zeigen ferner, daß sich durch Zusatz von nanoskaligem Bariumsulfat das Brandverhalten gemäß der 5V Stabprüfung verbessern läßt. Ferner bestehen die durch Schreddern und nochmaliges Verspritzen der Formmassen nach den Beispielen 6 und 10 hergestellten Rezyklate den UL-94 Test bei einer Dicke von 2,0 bzw. 0,8 mm mit der Prüfnote V0 (siehe Tabelle 2).

Die Kerbschlagzähigkeit der Formmasse aus Beispiel 10 nach ISO 180-4a bei Raumtemperatur lag sowohl vor als auch nach dem Rczyklieren bei 90 $kJ/m^2$.

**c) Transparenzverhalten**

Die Transparenz der nach den Beispielen 1 bis 3 hergestellten Formmassen wurde nach der Vorschrift ASTM D 1003 mit dem Gerät Haze-Gard Plus der Byk-Gardner GmbH, D-82538 Geretsried, Deutschland für eine Schichtdicke von 4 mm bestimmt. Die Ergebnisse des Transparenztest sind in Tabelle 3 zusammengefaßt.

Tabelle 3

| Transparenzverhalten | | |
|---|---|---|
| Beispiel | Schichtdicke | Transmission nach ASTM D 1003 |
| 1 | 4 mm | 92,8 |
| 2 | 4 mm | 93,0 |

Tabelle 3 (fortgesetzt)

| Transparenzverhalten | | |
|---|---|---|
| Beispiel | Schichtdicke | Transmission nach ASTM D 1003 |
| 3 | 4 mm | 90,6 |

Die Transparenztests zeigen, daß der Zusatz von nanoskaligem Bariumsulfat als flammschutzverstärkendes Mittel in einer Menge von 0,08 Gew.-%, bezogen auf das Gesamtgewicht der Formmasse, keinen nennenswerten Einfluß auf die Transparenz der Formmassen hat. Die erfindungsgemäße Formmasse aus Beispiel 3 weist mit einer Transmission von 90,6 bei einer Schichtdicke von 4 mm ein ausgezeichnetes Transparenzverhalten auf.

## Patentansprüche

1. Thermoplastische Formmasse, die ein amorphes thermoplastisches Polymer und mindestens ein Flammschutzmittel enthält, **dadurch gekennzeichnet, dass** die Formmasse mindestens ein Erdalkalisulfat mit jeweils einer mittleren Teilchengrösse von bis zu 400 nm umfasst und dass das Flammschutzmittel ganz oder teilweise fluorierte Sulfonsäuresalze der allgemeinen Formel (I)

$$[R\text{-}SO_3]_n^- M^{n+} \qquad (I)$$

worin

R ein geradkettiger oder verzweigter aliphatischer Rest mit 1 bis 30 Kohlenstoffatomen oder ein aromatischer Rest mit 6 bis 30 Kohlenstoffatomen, die ganz oder teilweise halogeniert sein können,

M ein beliebiges Kation und

n eine der Valenz von M ensprechende Zahl ist,

sind.

2. Formmasse nach Anspruch 1, **dadurch gekennzeichnet, dass** das Erdalkalisulfat ausgewählt ist aus $MgSO_4$, $CaSO_4$, $SrSO_4$ und $BaSO_4$.

3. Formmasse nach Anspruch 2, **dadurch gekennzeichnet, dass** das Erdalkalisulfat Bariumsulfat ist.

4. Formmasse nach Anspruch 1, **dadurch gekennzeichnet, dass** das Erdalkalisulfat jeweils eine mittlere Teilchengrösse von bis zu 200 nm, insbesondere von etwa 5 bis 40 nm aufweist.

5. Formmasse nach Anspruch 1, **dadurch gekennzeichnet, dass** das Erdalkalisulfat in einer Menge von 0,001 bus 5,0 Gew.%, insbesondere bis 2,0 Gew.-%, bezogen auf das Gesamtgewicht der Formmasse, zugegen ist.

6. Formmasse nach Anspruch 1, **dadurch gekennzeichnet, dass** die Menge des eingesetzten Flammschutzmittels 0,001 bis 5,0 Gew.%, insbesondere 0,05 bis 0,5 Gew.-%, bezogen auf das Gesamtgewicht der Formmasse, beträgt.

7. Formmasse nach Anspruch 1, **dadurch gekennzeichnet, dass** die Formmasse zusätzlich mindestens einen fluorierten Kohlenwasserstoff wie Polytetrafluorethylen enthält.

8. Formmasse nach Anspruch 7, **dadurch gekennzeichnet, dass** die Menge der fluorierten Kohlenwasserstoffe 0,001 bis 0,5 Gew.%, insbesondere 0,01 bis 0,1 Gew.-%, bezogen auf das Gesamtgewicht der Formmasse, beträgt.

9. Verfahren zur Herstellung einer Formmasse nach einem der Ansprüche 1 bis 8, **dadurch gekennzeichnet, dass** man Flammschutzmittel und Erdalkalisulfat sowie gegebenenfalls fluorierten Kohlenwasserstoff mit den flammwidrig auszurüstenden thermoplastischen Polymeren vermischt.

**10.** Formkörper, der unter Einsatz der thermoplastischen Formmasse nach einem der Ansprüche 1 bis 8 hergestellt wurde.

**11.** Formkörper nach Anspruch 10, **dadurch gekennzeichnet, dass** er erhältlich ist unter Verwendung eines Rezyklats der Formmasse nach einem der Ansprüche 1 bis 8.

**12.** Verfahren zur Herstellung eines Formkörpers nach Anspruch 10, **dadurch gekennzeichnet, dass** man die Formmasse durch Extrusion oder Spritzguss zu Formkörpern verarbeitet.

**13.** Verwendung eines Erdalkalisulfats mit jeweils einer mittleren Teilchengrösse von bis zu 400 nm in thermoplastischen Formmassen aus amorphen thermoplastischen Polymeren zur Erhöhung der flammhemmenden Wirkung von Flammschutzmitteln.

**Claims**

**1.** Thermoplastic moulding composition which comprises an amorphous thermoplastic polymer and at least one flame retardant, **characterised in that** the moulding composition includes at least one alkaline earth metal sulfate having in each case an average particle size of up to 400 nm and that the flame retardant comprises fully or partially fluorinated sulfonic acid salts corresponding to the general formula (I)

$$[R\text{-}SO_3]_n^- \, M^{n+} \qquad (I)$$

in which

R is a straight-chain or branched aliphatic radical having 1 to 30 carbon atoms or an aromatic radical having 6 to 30 carbon atoms which may be fully or partially halogenated,

M is any cation, and

n is a number corresponding to the valency of M.

**2.** Moulding composition according to claim 1, **characterised in that** the alkaline earth metal sulfate is selected from among $MgSO_4$, $CaSO_4$, $SrSO_4$ and $BaSO_4$.

**3.** Moulding composition according to claim 2, **characterised in that** the alkaline earth metal sulfate is barium sulfate.

**4.** Moulding composition according to claim 1, **characterised in that** the alkaline earth metal sulfate in each case has an average particle size of up to 200 nm, in particular approximately 5 to 40 nm.

**5.** Moulding composition according to claim 1, **characterised in that** the alkaline earth metal sulfate is present in a quantity of from 0.001 to 5.0 wt.%, in particular up to 2.0 wt.%, in relation to the total weight of the moulding composition.

**6.** Moulding composition according to claim 1, **characterised in that** the quantity of the flame retardant utilised is from 0.001 to 5.0 wt.%, in particular 0.05 to 0.5 wt.%, in relation to the total weight of the moulding composition.

**7.** Moulding composition according to claim 1, **characterised in that** the moulding composition comprises additionally at least one fluorinated hydrocarbon such as polytetrafluoroethylene.

**8.** Moulding composition according to claim 7, **characterised in that** the quantity of the fluorinated hydrocarbons is from 0.001 to 0.5 wt.%, in particular 0.01 to 0.1 wt.%, in relation to the total weight of the moulding composition.

**9.** Process for the preparation of a moulding composition according to one of claims 1 to 8, **characterised in that**

flame retardant and alkaline earth metal sulfate as well as optionally fluorinated hydrocarbon are mixed with the thermoplastic polymers which are to be equipped to be flame-resistant.

**10.** Moulded body produced with the use of the thermoplastic moulding composition according to one of claims 1 to 8.

**11.** Moulded body according to claim 10, **characterised in that** it is obtainable with the use of a recycled product made of the moulding composition according to one of claims 1 to 8.

**12.** Process for the production of a moulded body according to claim 10, **characterised in that** the moulding composition is processed by extrusion or injection moulding to form moulded bodies.

**13.** Use of an alkaline earth metal sulfate having in each case an average particle size of up to 400 nm in thermoplastic moulding compositions prepared from amorphous thermoplastic polymers in order to increase the flame-retardant effect of flame retardants.

## Revendications

**1.** Matière moulable thermoplastique, qui contient un polymère amorphe thermoplastique et au moins un agent de protection contre les flammes, **caractérisée en ce que** la matière moulable comprend au moins un sulfate alcalino-terreux avec chaque fois une granulométrie moyenne de jusqu'à 400 nm et **en ce que** l'agent de protection contre les flammes est un sel d'acide sulfonique complètement ou partiellement fluoré, de la formule générale (I) :

$$[R - SO_3]_n^- M^{n+} \quad (I)$$

où

R est un reste aliphatique linéaire ou ramifié ayant 1 à 30 atomes de carbone ou un reste aromatique ayant 6 à 30 atomes de carbone, qui peuvent être complètement ou partiellement halogénés ;

M est un cation quelconque, et

n est un nombre correspondant à la valence de M.

**2.** Matière moulable suivant la revendication 1, **caractérisée en ce que** le sulfate alcalino-terreux est choisi parmi $MgSO_4$, $CaSO_4$, $SrSO_4$ et $BaSO_4$.

**3.** Matière moulable suivant la revendication 2, **caractérisée en ce que** le sulfate alcalino-terreux est le sulfate de baryum.

**4.** Matière moulable suivant la revendication 1, **caractérisée en ce que** le sulfate alcalino-terreux présente chaque fois, une granulométrie moyenne de jusqu'à 200 nm, en particulier allant d'environ 5 à 40 nm.

**5.** Matière moulable suivant la revendication 1, **caractérisée en ce que** le sulfate alcalino-terreux est ajouté en une quantité allant de 0,001 à 5,0% en poids, en particulier de jusqu'à 2,0% en poids, sur base du poids total de la matière moulable.

**6.** Matière moulable suivant la revendication 1, **caractérisée en ce que** la quantité de l'agent de protection contre les flammes mis en oeuvre se situe dans l'intervalle allant de 0,001 à 5,0% en poids, en particulier de 0,05 à 0,5% en poids, sur base du poids total de la matière moulable.

**7.** Matière moulable suivant la revendication 1, **caractérisée en ce que** la matière moulable contient en outre, au moins un hydrocarbure fluoré comme le polytétrafluoroéthylène.

**8.** Matière moulable suivant la revendication 7, **caractérisée en ce que** la quantité de l'hydrocarbure fluoré se situe dans l'intervalle allant de 0,001 à 0,5% en poids, en particulier de 0,01 à 0,1% en poids, sur base du poids total de la matière moulable.

**9.** Procédé de préparation d'une matière moulable suivant l'une quelconque des revendications 1 à 8, **caractérisé**

**en ce que** l'on mélange l'agent de protection contre les flammes et le sulfate alcalino-terreux, ainsi que le cas échéant, l'hydrocarbure fluoré, avec le polymère thermoplastique à rendre ininflammable.

**10.** Article moulé, qui est préparé par mise en oeuvre de la matière moulable thermoplastique suivant l'une quelconque des revendications 1 à 8.

**11.** Article moulé suivant la revendication 10, **caractérisé en ce qu'**il peut être obtenu en utilisant un recyclat de la matière moulable suivant l'une quelconque des revendications 1 à 8.

**12.** Procédé de préparation d'un article moulé suivant la revendication 10, **caractérisé en ce que** l'on travaille la matière moulable par extrusion ou moulage par injection en articles moulés.

**13.** Utilisation d'un sulfate alcalino-terreux avec chaque fois, une granulométrie moyenne de jusqu'à 400 nm dans des matières moulables thermoplastiques constituées de polymères thermoplastiques amorphes pour augmenter l'activité ignifuge des agents de protection contre les flammes.